# EUROPÄISCHE PATENTSCHRIFT

(11) **EP 3 324 729 B1**
(45) Veröffentlichungstag und Bekanntmachung des Hinweises auf die Patenterteilung: **17.03.2021**
(21) Anmeldenummer: 16751188.0
(22) Anmeldetag: 19.07.2016
(51) Int. Cl.: A01G 9/24, A01G 9/26

(54) **KÜHL- UND KONDENSATIONSEINRICHTUNG FÜR EIN GEWÄCHSHAUS**
AIRCONDITIONINGSYSTEM FOR A GREENHOUSE
DISPOSITIF DE CLIMATISATION POUR UNE SERRE

(30) Priorität: 21.07.2015 AT 506412015
(43) Veröffentlichungstag der Anmeldung: 30.05.2018
(73) Patentinhaber: Kerschgens, Daniel, 1190 Wien (AT); Russwurm, Heinz Georg, 1190 Wien (AT)
(72) Erfinder: Kerschgens, Daniel, 1190 Wien (AT); Russwurm, Heinz Georg, 1190 Wien (AT)
(74) Vertreter: LifeTech IP Spies & Behrndt Patentanwälte PartG mbB
(86) Internationale Anmeldenummer: PCT/EP2016/067173
(87) Internationale Veröffentlichungsnummer: WO 2017/013112

(56) Entgegenhaltungen:
- WO-A1-2015/028470
- WO-A1-2015/093943
- NL-A- 9 001 874
- US-A1- 2004 194 371

## Beschreibung

Die Erfindung betrifft eine Kühl- und Kondensationseinrichtung für ein Gewächshaus, vorzugsweise ein Folientreibhaus, mit zumindest einem im Gewächshaus angeordneten Kondensator, dessen Wand an der Außenseite mit der zu kühlenden Luft im Gewächshaus in Kontakt steht und an der Innenseite mit einem Kühlmedium beaufschlagt ist.

Gewächshäuser bzw. Folientreibhäuser werden bei starker Sonneneinstrahlung im Verlauf eines Tages oft in einem Ausmaß aufgeheizt, der für die Kulturen im Inneren des Gewächshauses schädlich ist. Im einfachsten Fall ist es daher notwendig Lüftungsklappen zu öffnen, welche allerdings für die Kulturen schädliche Zugluft erzeugen können und zudem mit der entweichenden Warmluft Wasserdampf abführen und daher den Boden im Inneren des Treibhauses sowie die Kulturen austrocknen.

Es wurden daher bereits Problemlösungen mit einer Wärmetauschereinrichtung angedacht, welche beispielsweise in der WO 2015/028470 beschrieben sind. Das hier beschriebene Gewächshaus weist eine Wärmetauschereinrichtung mit insgesamt drei Paaren von Rohrleitungen auf, die über eine Trägereinrichtung an einer Tragstruktur oberhalb des Pflanzenraums des Gewächshauses aufgehängt sind. Bei den Rohrleitungen handelt es sich um Spiralrippenrohre mit radial abstehenden Spiralrippen, wobei die Rohrleitungen mittels der Trägereinrichtung zwischen einer oberen Stellung, im Kopfbereich der Pflanzen, und einer unteren Stellung, im Bereich von Pflanzrinnen verstellt werden können. Im Kühlbetrieb durchströmt Kühlwasser, das vorzugsweise eine Temperatur unter dem Taupunkt der im Gewächshaus befindlichen Luft aufweist, die Rohrleitungen, wobei sich im Kühlbetrieb die Rohrleitungen in der oberen Stellung, im Kopfbereich der Pflanzen befinden, sodass die im Gewächshaus aufsteigende warme, feuchte Luft die Rohrleitungen umströmen kann. Das führt dazu, dass die in der Luft enthaltene Luftfeuchtigkeit an den Rohrleitungen auskondensiert. Das Kondensat kann den Pflanzen zugeführt werden. Die Wärmetauscheinrichtung ist relativ sperrig und schwer, insbesondere wenn man das Gewicht des Kühlwassers berücksichtigt, sodass ein Einbau in Leichtbau-Gewächshäusern oder Folientreibhäusern nicht ohne zusätzliche Stützelemente möglich wäre.

Aufgabe der Erfindung ist es, eine Kühl- und Kondensationseinrichtung für ein Gewächshaus vorzuschlagen, welches sich durch eine einfache und kostengünstige Herstellung auszeichnet, wobei die Möglichkeit einer Nachrüstung bestehender Gewächshäuser und der problemlose Einsatz in Folientreibhäusern gegeben sein soll.

Diese Aufgabe wird erfindungsgemäß dadurch gelöst, dass der zumindest eine Kondensator als faltbarer Folienschlauch ausgeführt ist und insbesondere aus aneinandergereihten Hohlkörpern aus einem faltbaren Folienmaterial besteht, wobei der schlauchförmige Kondensator ausgehend von einer zusammengefaltenen Lagerform in eine längsgestreckte Betriebsform entfaltbar ist.

Der Vorteil der Erfindung besteht insbesondere darin, dass anstelle der starren, schweren Struktur der aus der WO 2015/028470 bekannten Einrichtung, die mit deren Spiralrohren und Aufhängevorrichtungen an die spezielle Form und Abmessung eines Gewächshauses angepasst werden muss, leichte, völlig flexible Kondensatoren aus einem faltbaren Folienmaterial aus Kunststoff verwendet werden, die im zusammengefaltenen Zustand vorrätig gehalten werden und erst bei der Montage im Gewächshaus - ähnlich wie ein Faltenbalg - entfaltet werden.

Einen weiteren Vorteil bietet die Demontage der Kühl- und Kondensationseinrichtung, da wesentliche Teile, nämlich die schlauchförmigen Kondensatoren aus Folienmaterial rezyklierbar sind und daher auch keine Reinigung und Aufbewahrung dieser Teile am Saisonende erforderlich ist.

Die einzelnen Hohlkörper des Kondensators bestehen bevorzugt aus den Mantelflächen gerader Pyramidenstümpfe oder Kegelstümpfe, die einen Basisrand und eine kragenförmige Übertrittsöffnung zum benachbarten Hohlkörper aufweisen, wobei die Pyramidenstümpfe oder Kegelstümpfe jeweils an deren Basisrändern und Krägen miteinander verbunden sind. Die Grundstruktur kann dreieckig, viereckig oder auch sechseckig sein, wobei auch Hohlkörper in Form eines doppelten Kegelstumpfes möglich sind.

Vorteile bei der Herstellung ergeben sich dann, wenn die Hohlkörper des Kondensators eine quadratische Querschnittsfläche aufweisen und einen flachen, oktaederartigen Körper bilden, wobei zwei gegenüberliegende, stumpfe Ecken zur Ausbildung der Übertrittsöffnungen für das Kühlmedium abgeschnitten sind.

Es ergeben sich zwei Hauptausführungsvarianten für die erfindungsgemäße Kühl- und Kondensationseinrichtung, wobei in einer ersten Variante der zumindest eine schlauchförmige Kondensator bzw. mehrere parallel zueinander angeordnete Kondensatoren, in horizontaler Lage im Gewächshaus befestigt werden, sowie eine zweite Ausführungsvariante, bei welcher die schlauchförmigen Kondensatoren in einer vertikalen Ausrichtung frei von der Decke hängend in einem Gewächshaus montiert werden.

Die bevorzugten Ausführungsvarianten der erfindungsgemäßen Kühl- und Kondensationseinrichtung werden in den nachfolgenden Zeichnungen näher erläutert. Es zeigen:
- Fig. 1: eine erste Ausführungsvariante einer erfindungsgemäßen Kühlund Kondensationseinrichtung mit einem horizontalen, schlauchförmigen Kondensator in einer dreidimensionalen Ansicht;
- Fig. 2: ein Detail II des Kondensators aus Fig. 1 in vergrößerter Darstellung;
- Fig. 3: den Kondensator aus Fig. 1 in zusammengefaltetem Zustand;
- Fig. 4: eine Detaildarstellung des Kondensators gemäß Fig. 2 in einem Längsschnitt;
- Fig. 5: den Kondensator gemäß Fig. 2 mit zusätzlichen Komponenten;
- Fig. 6: ein ebenes Folienelement zur Herstellung eines Hohlkörpers des schlauchförmigen Kondensators;
- Fig. 7: einzelne Elemente eines Hohlkörpers zur Herstellung des schlauchförmigen Kondensators in dreidimensionaler Darstellung;
- Fig. 8: eine zweite Ausführungsvariante einer erfindungsgemäßen Kühlund Kondensationseinrichtung mit einem vertikalen, schlauchförmigen Kondensator in einer dreidimensionalen Ansicht;
- Fig. 9: eine vergrößerte Schnittdarstellung des vertikalen Kondensators gemäß Fig. 8;
- Fig. 10: ein Übergangselement des vertikalen Kondensators zwischen den einzelnen Hohlkörpern; sowie
- Fig. 11: eine Ausführungsvariante zur Herstellung eines Schlauchförmigen Kondensators gemäß Fig. 8.

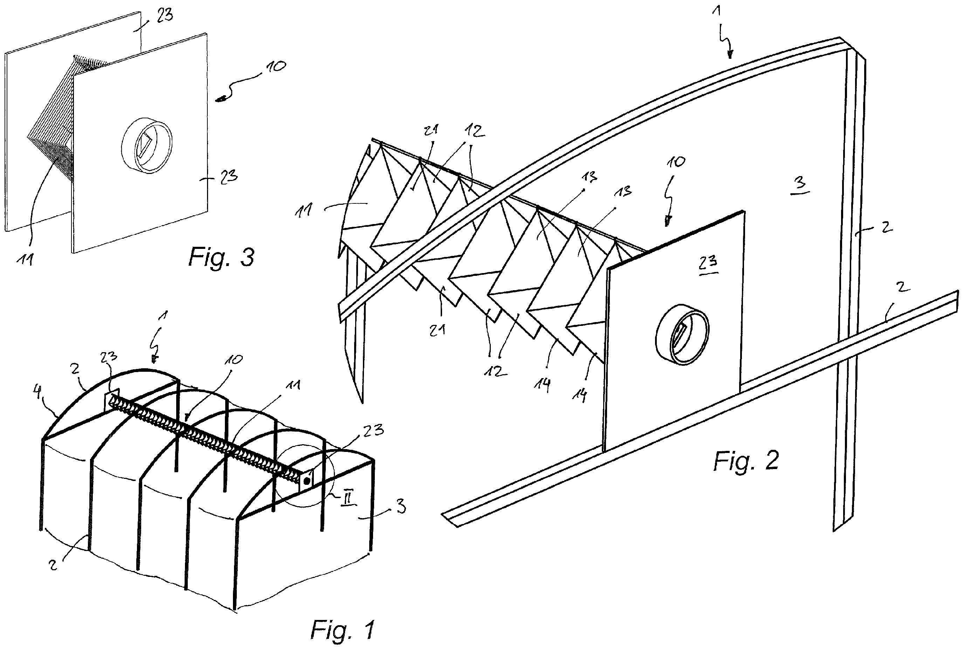

Die in den Figuren 1 bis 7 dargestellte Ausführungsvariante einer Kühl- und Kondensationseinrichtung 10 für ein Gewächshaus 1 mit einem folienbedeckten Metallrahmen 2, weist zumindest einen, im Wesentlichen horizontal angeordneten, schlauchförmigen Kondensator 11 auf (wobei natürlich mehrere, parallel nebeneinander angeordnete Kondensatoren 11 von Vorteil sind), deren Wand an der Außenseite 21 mit der zu kühlenden Luft im Gewächshaus 1 in Kontakt steht und an der Innenseite 22 mit einem Kühlmedium beaufschlagt ist. Die schlauchförmigen Kondensatoren 11 bestehen beispielsweise aus aneinandergereihten Hohlkörpern 12 aus einem faltbaren Folienmaterial, welche ausgehend von einer kompakten, zusammengefalteten Lagerform (siehe Fig. 3) in die z.B. in den Fig. 1 und Fig. 2 dargestellte längsgestreckte Betriebsform entfaltbar sind.

In der zusammengefalteten Lagerform kann die Länge des Folienschlauchs - im Vergleich zur Betriebsform - um 70% bis 95% verkürzt sein.

Zur Vergrößerung der wirksamen Oberfläche der Kühleinrichtung und zur leichteren Faltbarkeit bestehen die Hohlkörper 12 des Kondensators 11 beispielsweise aus den Mantelflächen 13 gerader Pyramidenstümpfe oder Kegelstümpfe, die jeweils einen Basisrand 14 und einen eine Übertrittsöffnung 16 zum benachbarten Hohlkörper 12 bildenden Kragen 15 aufweisen, wobei die Pyramiden- oder Kegelstümpfe jeweils an deren Basisrändern 14 und Krägen 15 miteinander verbunden sind.

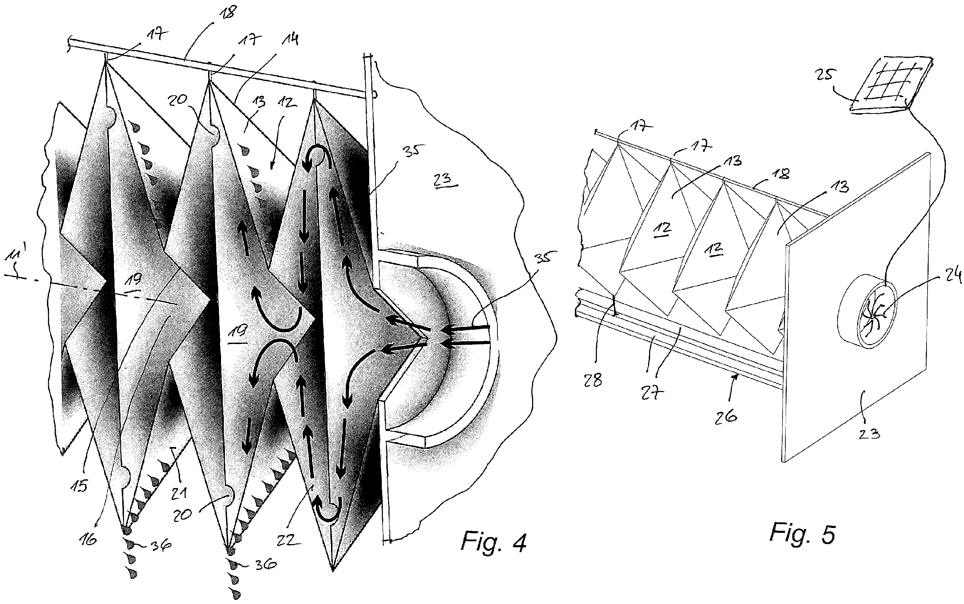

Bei einer einfach herzustellenden Ausführungsvariante (siehe Fig. 1 bis Fig. 7) weisen die Hohlkörper 12 des Kondensators 11 eine quadratische Querschnittsfläche auf und bilden einen flachen, oktaederartigen Körper, wobei zwei gegenüberliegende, stumpfe Ecken zur Ausbildung der Übertrittsöffnungen 16 für das Kühlmedium abgeschnitten sind (siehe Fig. 4).

Zur horizontalen Montage der schlauchförmigen Kondensatoren 11 im Gewächshaus 1 sind Befestigungsmittel 17, 18 vorgesehen, wobei am Einlassende und am Auslassende jedes schlauchförmigen Kondensators 11 jeweils ein Anschlussflansch 23 ausgebildet ist, der an eine Durchlassöffnung in einer Wand, beispielsweise der Vorderwand 3 und der Hinterwand 4 des Gewächshauses 1, anschließbar ist (siehe Fig. 1 und Fig. 2).

Als Befestigungsmittel für den schlauchförmigen Kondensator 11 können an den Hohlkörpern 12 befestigte Haken 17 vorgesehen sein, die in ein Tragseil 18, vorzugsweise aus Kunststoff, eingreifen. Das Tragseil 18 kann beispielsweise an den beiden Anschlussflanschen 23 befestigt sein.

Erfindungsgemäß ist im Inneren der Hohlkörper 12 im Bereich des Basisrandes 14 jeweils eine auf die Längsachse 11' des Kondensators 11 normal stehende Trennfläche 19 angeordnet, welche randseitige Durchlassöffnungen 20 für die als Kühlmedium verwendete Luft, vorzugsweise Umgebungs- bzw. Außenluft, aufweist (siehe Fig. 4, Pfeile 35). Durch diese Maßnahme wird der Luftstrom mehrfach umgelenkt, der Strömungsweg verlängert und die Kühlwirkung erhöht. Dargestellt ist auch das an der Außenseite 21 des Kondensators 11 abtropfende Kondensat 36.

Die im Inneren der Hohlkörper 12 angeordneten Trennflächen 19 weisen eine größere Wandstärke auf oder sind starrer ausgebildet als die flexible Mantelfläche 13 und üben daher eine Stützfunktion für die Hohlkörper 12 in deren längsgestreckten Betriebsform aus.

An oder in zumindest einem Anschlussflansch 23 des Kondensators 11 ist eine Ventilationseinrichtung 24 angeordnet, mit welcher ein Kühlluftstrom durch den Kondensator 11 in Druckrichtung oder Saugrichtung herstellbar ist. Bevorzugt kann die Ventilationseinrichtung 24 mit der elektrischen Energie aus einem Solarpaneel 25 angetrieben werden.

In Betriebsstellung unterhalb des schlauchförmigen Kondensators 11 kann erfindungsgemäß eine aufblasbare Sammelrinne 26 zur Aufnahme des an der Außenseite 21 des Kondensators 11 anfallenden Kondensats 36 befestigt sein. Gemäß der dargestellten Ausführungsvariante (siehe Fig. 5) besteht die Sammelrinne 26 aus einem Folienmaterial und weist randseitig angeordnete, aufblasbare, schlauchförmige Kammern 27 auf, an welchen Halteelemente 28 angreifen, die an den Hohlkörpern 12 des schlauchförmigen Kondensators 11 befestigt sind. Auch die Sammelrinnen 26 können am Saisonende rezykliert werden.

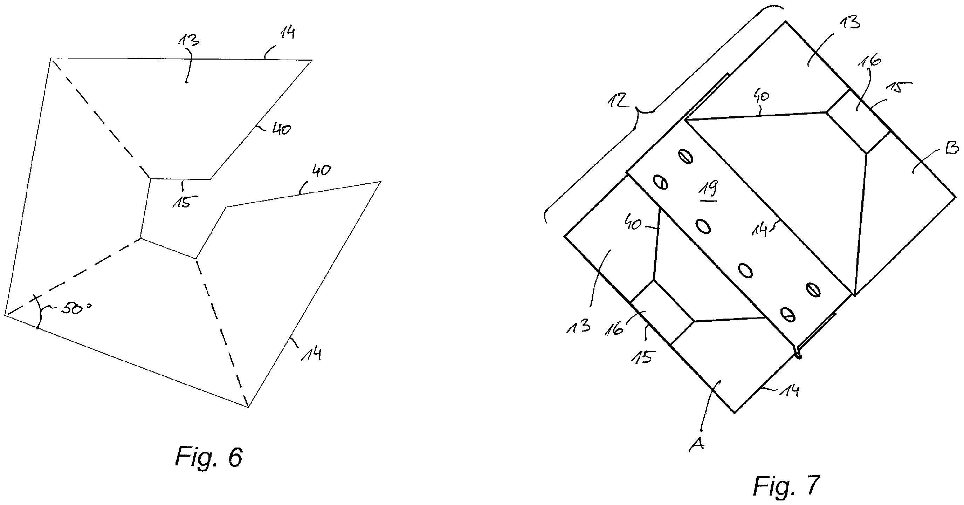

Fig. 6 zeigt ein ebenes Folienelement zur Herstellung eines Hohlkörpers 12 des schlauchförmigen Kondensators 11, welches aus einer Kunststofffolie ausgestanzt oder ausgeschnitten wird und nach der Verschweißung oder Klebung entlang der Ränder 40 die Mantelfläche 13 eines viereckigen, quadratischen Pyramidenstumpfes ergibt. Die vier Trapezflächen weisen jeweils einen spitzen Winkel von ca. 50° auf. Die einzelnen Hohlkörper 12 gemäß Fig. 7 bestehen aus einem ersten Pyramidenstumpf A und einem zweiten Pyramidenstumpf B, deren Basisränder 14 unter Zwischenlage einer Trennfläche 19 samt randseitigen Durchlassöffnungen 20 für die Kühlluft miteinander verschweißt oder verklebt werden. Schließlich werden die einzelnen Hohlkörper 12 am Kragen 15, der die Übertrittsöffnung 16 bildet, verschweißt oder zusammengeklebt.

Es ist auch möglich zwei ebene Folienelemente gemäß Fig. 6 übereinander zu legen und zunächst an der Kragenlinie 15 zu verschweißen oder zu verkleben. Danach werden die beiden Folienelemente in entgegen gesetzten Richtungen hochgezogen und an den Rändern 40 verschweißt. Die so entstandenen Elemente werden dann unter Zwischenlage jeweils einer Trennfläche 19 miteinander zu einem schlauchförmigen Kondensator 11 verbunden.

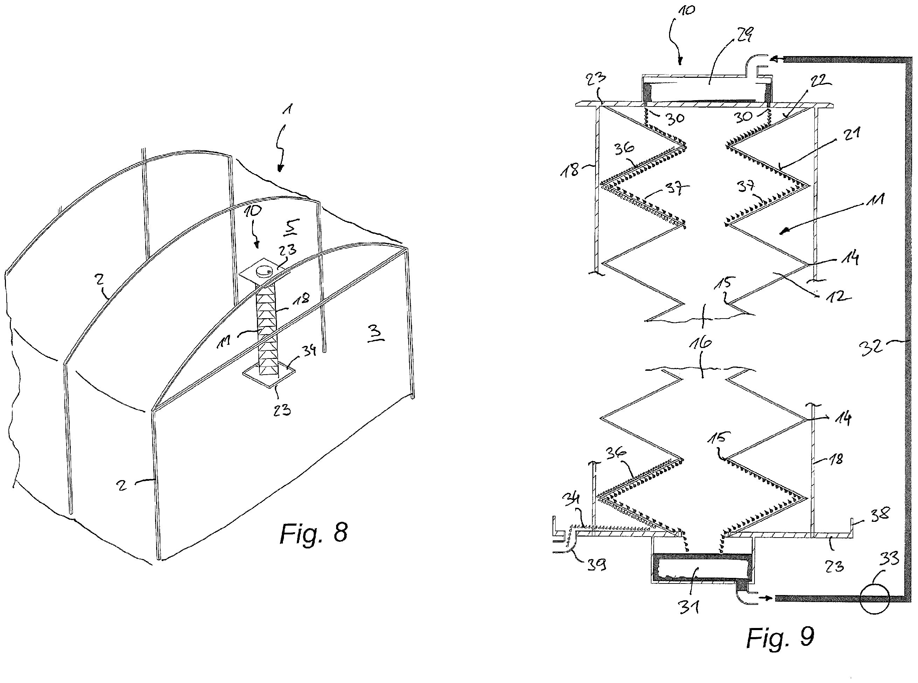

Die in den Figuren 8 bis 10 dargestellte Ausführungsvariante einer Kühl- und Kondensationseinrichtung 10 für ein Gewächshaus 1 mit einem folienbedeckten Metallrahmen 2, weist zumindest einen, im Wesentlichen vertikal angeordneten, schlauchförmigen Kondensator 11 auf (wobei natürlich auch hier mehrere, parallel nebeneinander angeordnete Kondensatoren 11 von Vorteil sind), deren Wand an der Außenseite 21 mit der zu kühlenden Luft im Gewächshaus 1 in Kontakt steht und an der Innenseite 22 mit einem Kühlmedium (Kühlwasser 37 in Tropfenform) beaufschlagt ist. Die schlauchförmigen Kondensatoren 11 bestehen beispielsweise - wie oben beschrieben - aus aneinandergereihten Hohlkörpern 12 aus einem faltbaren Folienmaterial, welche ausgehend von einer kompakten, zusammengefalteten Lagerform (siehe Fig. 3) in die in Fig. 8 dargestellte längsgestreckte Betriebsform entfaltbar sind.

Am Einlassende des schlauchförmigen Kondensators 11, vorzugsweise an einem Anschlussflansch 23, mit welchem der Kondensator an der Dachfolie 5 oder am Metallrahmen 2 des Gewächshauses 1 befestigt ist, ist ein Kühlwasserbehälter 29 ausgebildet, welcher bodenseitige Öffnungen 30 zur Abgabe von Kühlwasser 37 in Tropfenform in das Innere des schlauchförmigen Kondensators 11 aufweist. Das tropfenförmig abgegebene Kühlwasser tropft auf die Innenseite 22 der Hohlkörper 12 aus Folienmaterial und fließt entlang der Innenfläche ab. An der Außenseite des Kondensators bildet sich bei geeigneten Bedingungen Kondensat 36, welches in einfachen Ausführungsvarianten direkt auf die Pflanzen im Gewächshaus 1 tropft.

Gemäß einer vorteilhaften Weiterbildung kann am Auslassende des schlauchförmigen Kondensators 11, vorzugsweise an einem endseitigen Anschlussflansch 23, ein Auffangbehälter 31 für das Kühlwasser ausgebildet sein, wobei ausgehend vom Auffangbehälter 31 eine in den eingangsseitig angeordneten Kühlwasserbehälter 29 mündende Rückführeinrichtung 32 für das Kühlwasser vorgesehen ist. Weiters kann die Rückführeinrichtung 32 mit einer vorzugsweise mittels Solarenergie betriebenen Kühlwasserpumpe 33 ausgestattet sein.

Zur Begrenzung der Längserstreckung, des von der Decke des Gewächshauses 1 hängenden Kondensators 11 sind zwischen dem einlassseitigen und dem auslassseitigen Anschlussflansch 23 Tragseile 18, vorzugsweise aus Kunststoff, gespannt. Bei der vertikalen Variante mit Tropfkühlung sind keine Trennflächen 19 vorgesehen.

Falls das Kondensat 36 nicht frei auf die Kulturen abtropfen soll, kann am Auslassende des schlauchförmigen Kondensators 11 eine Auffangwanne 34 zur Aufnahme des an der Außenseite 21 des Kondensators 11 anfallenden Kondensats 36 befestigt sein. In der dargestellten Ausführungsvariante wird die Auffangwanne 34 durch eine umlaufende Wand 38 des unteren Anschlussflansches 23 gebildet und weist einen Abflussschlauch 39 auf.

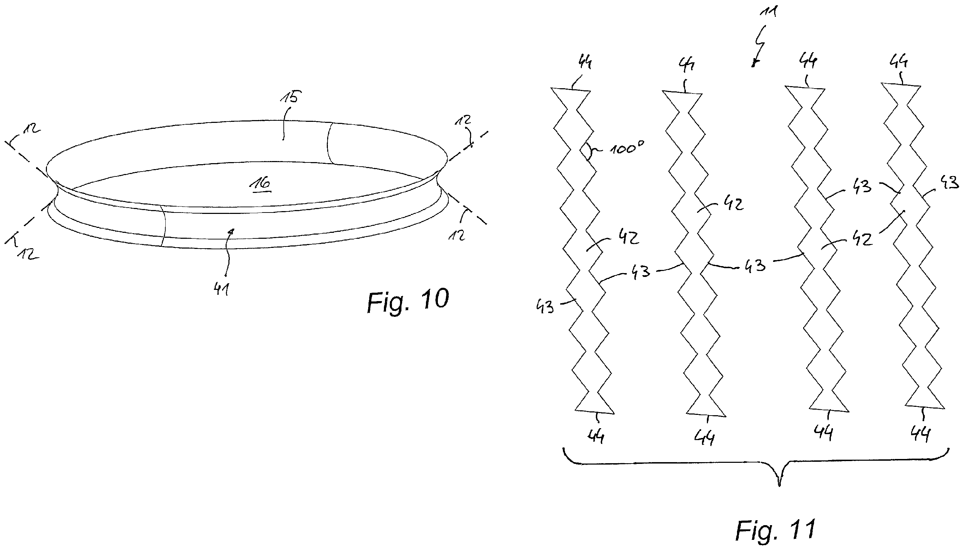

Fig. 10 zeigt ein Übergangselement 41 des vertikalen Kondensators 11 aus Folienmaterial das zwischen (nur schematisch angedeuteten) benachbarten Hohlkörpern 12 eingeschweißt oder eingeklebt werden kann, um den Übergang an dem die Übertrittsöffnung 16 bildenden Kragen 15 abzurunden. Durch diese Maßnahme wird die Benetzung der Innenseite des Kondensators 11 verbessert und ein Abtropfen des Kühlwassers am Kragen 15 vermieden.

Für die vertikal angeordnete Variante der Kühl- und Kondensationseinrichtung 10 kann der zusammenfaltbare, schlauchförmige Kondensator 11 gemäß Fig. 11 aus mehreren (in der dargestellten Variante vier) Folienstreifen 42 gebildet sein, die an den beispielsweise im Winkel von ca. 100° gezackten, seitlichen Rändern 43 zusammengeschweißt oder geklebt werden. Anschließend werden an den Enden 44 Anschlussflansche 23 befestigt.

## Patentansprüche

1. Kühl- und Kondensationseinrichtung (10) für ein Gewächshaus (1), vorzugsweise ein Folientreibhaus, mit zumindest einem angeordneten Kondensator (11), dessen Wand an der Außenseite (21) mit der zu kühlenden Luft in Kontakt steht und an der Innenseite (22) mit einem Kühlmedium beaufschlagbar ist, **dadurch gekennzeichnet, dass** der zumindest eine Kondensator (11) als faltbarer Folienschlauch ausgeführt ist und insbesondere aus aneinandergereihten Hohlkörpern (12) aus einem faltbaren Folienmaterial besteht, wobei der schlauchförmige Kondensator (11) ausgehend von einer zusammengefalteten Lagerform in eine längsgestreckte Betriebsform entfaltbar ist.

2. Kühl- und Kondensationseinrichtung (10) nach Anspruch 1, **dadurch gekennzeichnet, dass** die Hohlkörper (12) des Kondensators (11) aus den Mantelflächen (13) gerader Pyramidenstümpfe oder Kegelstümpfe bestehen, die jeweils einen Basisrand (14) und einen eine Übertrittsöffnung (16) zum benachbarten Hohlkörper (12) bildenden Kragen (15) aufweisen, wobei die Pyramidenstümpfe oder Kegelstümpfe jeweils an deren Basisrändern (14) und Krägen (15) miteinander verbunden sind.

3. Kühl- und Kondensationseinrichtung (10) nach Anspruch 2, **dadurch gekennzeichnet, dass** die Hohlkörper (12) des Kondensators (11) eine quadratische Querschnittsfläche aufweisen und einen flachen, oktaederartigen Körper bilden, wobei zwei gegenüberliegende, stumpfe Ecken zur Ausbildung der Übertrittsöffnungen (16) abgeschnitten sind .

4. Kühl- und Kondensationseinrichtung (10) nach einem der Ansprüche 1 bis 3, **dadurch gekennzeichnet, dass** der zumindest eine schlauchförmige Kondensator (11) Befestigungsmittel (17, 18) zur horizontalen Montage aufweist.

5. Kühl- und Kondensationseinrichtung (10) nach Anspruch 4, **dadurch gekennzeichnet, dass** im Inneren der Hohlkörper (12) im Bereich des Basisrandes (14) jeweils eine auf die Längsachse (11') des Kondensators (11) normal stehende Trennfläche (19) angeordnet ist, welche randseitige Durchlassöffnungen (20) für als Kühlmedium verwendete Luft, vorzugsweise Außenluft, aufweist.

6. Kühl- und Kondensationseinrichtung (10) nach Anspruch 5, **dadurch gekennzeichnet, dass** die im Inneren der Hohlkörper (12) angeordneten Trennflächen (19) eine größere Wandstärke aufweisen oder starrer ausgebildet sind als die Mantelfläche (13) und eine Stützfunktion für die Hohlkörper (12) in deren längsgestreckten Betriebsform ausüben.

7. Kühl- und Kondensationseinrichtung (10) nach einem der Ansprüche 4 bis 6, **dadurch gekennzeichnet, dass** am Einlassende und am Auslassende jedes schlauchförmigen Kondensators (11) jeweils ein Anschlussflansch (23) ausgebildet ist, der an eine Durchlassöffnung in einer Wand (3, 4) eines Gewächshauses (1) anschließbar ist.

8. Kühl- und Kondensationseinrichtung (10) nach einem der Ansprüche 4 bis 7, **dadurch gekennzeichnet, dass** als Befestigungsmittel für den schlauchförmigen Kondensator (11) an den Hohlkörpern (12) befestigte Haken (17) vorgesehen sind, die in ein Tragseil (18), vorzugsweise aus Kunststoff, eingreifen.

9. Kühl- und Kondensationseinrichtung (10) nach Anspruch 7 oder 8, **dadurch gekennzeichnet, dass** an oder in zumindest einem Anschlussflansch (23) des Kondensators (11) eine Ventilationseinrichtung (24) angeordnet ist, mit welcher ein Kühlluftstrom durch den Kondensator (11) herstellbar ist.

10. Kühl- und Kondensationseinrichtung (10) nach einem der Ansprüche 4 bis 9, **dadurch gekennzeichnet, dass** in Betriebsstellung unterhalb des schlauchförmigen Kondensators (11) eine aufblasbare Sammelrinne (26) zur Aufnahme des an der Außenseite (21) des Kondensators (11) anfallenden Kondensats befestigt ist.

11. Kühl- und Kondensationseinrichtung (10) nach Anspruch 10, **dadurch gekennzeichnet, dass** die Sammelrinne (26) aus einem Folienmaterial besteht und randseitig angeordnete, aufblasbare, schlauchförmige Kammern (27) aufweist, an welchen Halteelemente (28) angreifen, die an den Hohlkörpern (12) des schlauchförmigen Kondensators befestigt sind.

12. Kühl- und Kondensationseinrichtung (10) nach einem der Ansprüche 1 bis 3, **dadurch gekennzeichnet, dass** der zumindest eine schlauchförmige Kondensator (11) Befestigungsmittel (18, 23) zur vertikalen Montage aufweist.

13. Kühl- und Kondensationseinrichtung (10) nach Anspruch 12, **dadurch gekennzeichnet, dass** am Einlassende des schlauchförmigen Kondensators (11), vorzugsweise an einem Anschlussflansch (23), ein Kühlwasserbehälter (29) ausgebildet ist, welcher bodenseitige Öffnungen (30) zur Abgabe von Kühlwasser in Tropfenform in das Innere des schlauchförmigen Kondensators (11) aufweist, derart, dass das tropfenförmig abgegebene Kühlwasser auf die Innenseite (22) der Hohlkörper (12) aus Folienmaterial tropft und entlang der Innenfläche abfließt.

14. Kühl- und Kondensationseinrichtung (10) nach Anspruch 12 oder 13, **dadurch gekennzeichnet, dass** am Auslassende des schlauchförmigen Kondensators (11), vorzugsweise an einem Anschlussflansch (23), ein Auffangbehälter (31) für das Kühlwasser ausgebildet ist, sowie dass ausgehend vom Auffangbehälter (31) eine in den eingangsseitig angeordneten Kühlwasserbehälter (29) mündende Rückführeinrichtung (32) für das Kühlwasser vorgesehen ist.

15. Kühl- und Kondensationseinrichtung (10) nach Anspruch 14, **dadurch gekennzeichnet, dass** die Rückführeinrichtung (32) für das Kühlwasser eine vorzugsweise mittels Solarenergie betriebene Kühlwasserpumpe (33) aufweist.

16. Kühl- und Kondensationseinrichtung (10) nach Anspruch 14 oder 15, **dadurch gekennzeichnet, dass** zwischen dem einlassseitigen und dem auslassseitigen Anschlussflansch (23) Tragseile (18), vorzugsweise aus Kunststoff, gespannt sind, die die Längserstreckung des schlauchförmigen Kondensators (11) begrenzen.

17. Kühl- und Kondensationseinrichtung (10) nach einem der Ansprüche 12 bis 16, **dadurch gekennzeichnet, dass** am Auslassende des schlauchförmigen Kondensators (11) eine Auffangwanne (34) zur Aufnahme des an der Außenseite (21) des Kondensators (11) anfallenden Kondensats befestigt ist.

## Claims

1. Cooling and condensation device (10) for a greenhouse (1), preferably a film greenhouse, including at least one arranged condenser (11), the wall of which contacts the air to be cooled on the outside (21) thereof, and on the inside (22) thereof a cooling medium is applicable,
**characterized in that**
the at least one condenser (11) is configured as a foldable film tube, and consists in particular of hollow bodies (12) which are arranged in series and are made of a foldable film material,
wherein the tubular condenser (11) is unfoldable from a folded storage form into an elongated operating form.

2. Cooling and condensation device (10) according to claim 1,
**characterized in that**
the hollow bodies (12) of the condenser (11) comprise the peripheral surfaces (13) of straight truncated pyramids or truncated cones which each include a base rim (14) and a collar (15) constituting a joining opening (16) to the adjacent hollow body (12), respectively, wherein the truncated pyramids or truncated cones are coupled to one another on the base rims (14) and collars (15) thereof, respectively.

3. Cooling and condensation device (10) according to claim 2,
**characterized in that**
the hollow bodies (12) of the condensator (11) comprise a square cross-sectional area and form a flat octahedron-like body, wherein two opposite blunt corners are truncated in order to form the joining openings (16).

4. Cooling and condensation device (10) according to one of the claims 1 to 3,
**characterized in that**
the at least one tubular condenser (11) comprises fastening means (17, 18) for horizontal mounting.

5. Cooling and condensation device (10) according to claim 4,
**characterized in that**
a separating surface (19) positioned normal relative to the longitudinal axis (11') of the condenser (11) is arranged inside the hollow bodies (12) in the region of the base rim (14), respectively, which comprises edge-side through-holes (20) for air, preferably outside air, which is used as a cooling medium.

6. Cooling and condensation device (10) according to claim 5,
**characterized in that**
the separating surfaces (19) which are arranged within the hollow body (12) comprise a larger wall thickness or are formed more rigid than the peripheral surface (13) and provide a supporting function for the hollow bodies (12) in the elongated operating form thereof.

7. Cooling and condensation device (10) according to one of the claims 4 to 6,
**characterized in that**
at the inlet end and the outlet end of each tubular condenser (11) a coupling flange (23) is formed, respectively, which may be coupled to a through-hole of a wall (3,4) of a greenhouse.

8. Cooling and condensation device (10) according to one of the claims 4 to 7,
**characterized in that**
as fastening means for the tubular condenser (11), hooks (17) are provided which are fastened to the hollow bodies (12), which engage with a support rope (18), preferably made of resin.

9. Cooling and condensation device (10) according to claim 7 or 8,
**characterized in that**
on or in at least one connection flange (23) of the condenser (11) a ventilation device (24) is arranged by means of which a flow of cooling air may be generated by the condenser (11).

10. Cooling and condensation device (10) according to one of the claims 4 to 9,
**characterized in that**
in the operating position, an inflatable collecting channel (26) for receiving the condensate which is generated on the outside (21) of the condenser (11) is fastened below the tubular condenser (11).

11. Cooling and condensation device (10) according to claim 10,
**characterized in that**
the collecting channel (26) is made of a film material and comprises edge-side inflatable tubular chambers (27), wherein retaining elements (28) engage which are fixed on the hollow bodies (12) of the tubular condenser.

12. Cooling and condensation device (10) according to one of the claims 1 to 3,
**characterized in that**
the at least one tubular condenser (11) comprises fastening means (18, 23) for vertical mounting.

13. Cooling and condensation device (10) according to claim 12,
**characterized in that**
a cooling water container (20) is formed at the inlet end of the tubular condenser (29), preferably on a coupling flange (23), which includes bottom-side openings (30) for discharging the cooling water as drops into the interior of the tubular condenser (11) in a way that the cooling water being discharged as drops, drops onto the interior (22) of the hollow body (12) of film material, and flows out along the inner surface.

14. Cooling and condensation device (10) according to claim 12 or 13,
**characterized in that**
at the outlet end of the tubular condenser (11), preferably on a coupling flange (23), a collection container (31) for cooling water is formed, and that starting from the collection container (31) a return device (32) for cooling water is provided which is ending in the input-side cooling water container (29).

15. Cooling and condensation device (10) according to claim 14,
**characterized in that**,
the return device (32) for the cooling water preferably comprises a cooling water pump (33) which is operated by means of solar energy.

16. Air-conditioning device according to claim 14 or 15,
**characterized in that**
support ropes (18), preferably made of resin, are clamped between the input-side and the output-side coupling flanges (23) which limit the longitudinal extension of the tubular condenser (11).

17. Cooling and condensation device (10) according to one of the claims 12 to 16,
**characterized in that**
a collecting trough (34) is mounted at the outlet end of the tubular condenser (11) in order to receive the condensate which is generated on the outside (21) of the condenser (11).

## Revendications

1. Dispositif de refroidissement et de condensation (10) pour une serre (1), de préférence une serre en feuilles, doté d'au moins un condensateur (11) monté dont la paroi sur le côté extérieur (21) est en contact avec l'air à refroidir et auquel peut être appliqué, sur le côté intérieur (22), un milieu de refroidissement, **caractérisé en ce que** ledit au moins un condensateur (11) est réalisé en tant que tube en feuilles pliable et est composé notamment de corps creux (12) mis bout à bout, en matériau en feuilles pliable, ledit condensateur (11) de forme tubulaire pouvant être déplié pour passer d'une forme de stockage pliée en une forme d'utilisation allongée.

2. Dispositif de refroidissement et de condensation (10) selon la revendication 1, **caractérisé en ce que** les corps creux (12) du condensateur (11) se composent des surfaces d'enveloppe (13) de troncs de pyramide ou troncs de cône droits qui présentent chacun un bord de base (14) et une collerette (15) formant une ouverture de déversement (16) vers le corps creux voisin (12), lesdits troncs de pyramide ou troncs de cône étant reliés les uns aux autres chacun au niveau de leurs bords de base (14) et collerettes (15).

3. Dispositif de refroidissement et de condensation (10) selon la revendication 2, **caractérisé en ce que** les corps creux (12) du condensateur (11) présentent une surface de section quadratique et forment un corps plat de forme octaédrale, deux coins obtus en vis à vis étant découpés pour former les ouvertures de déversement (16).

4. Dispositif de refroidissement et de condensation (10) selon l'une quelconque des revendications 1 à 3, **caractérisé en ce que** ledit au moins un condensateur (11) de forme tubulaire présente des moyens de fixation (17, 18) destinés au montage horizontal.

5. Dispositif de refroidissement et de condensation (10) selon la revendication 4, **caractérisé en ce qu'**une surface de séparation (19) située de façon normale sur l'axe longitudinal (11') du condensateur (11) est agencée respectivement à l'intérieur des corps creux (12) au niveau du bord de base (14), laquelle surface de séparation présente des ouvertures de passage (20) périphériques pour l'air utilisé en tant que milieu de refroidissement, de préférence de l'air extérieur.

6. Dispositif de refroidissement et de condensation (10) selon la revendication 5, **caractérisé en ce que** les surfaces de séparation (19) agencées à l'intérieur des corps creux (12) présentent une épaisseur de paroi plus importante ou sont conçus plus rigides que la surface d'enveloppe (13) et qu'elles exercent une fonction de soutien pour les corps creux (12) dans leur forme d'utilisation allongée.

7. Dispositif de refroidissement et de condensation (10) selon l'une quelconque des revendications 4 à 6,
**caractérisé en ce qu'**une bride de raccordement (23), qui peut être raccordée à une ouverture de passage dans une paroi (3, 4) d'une serre (1), est formée respectivement à l'extrémité d'entrée et à l'extrémité de sortie de chaque condensateur (11) de forme tubulaire.

8. Dispositif de refroidissement et de condensation (10) selon l'une quelconque des revendications 4 à 7,
**caractérisé en ce que** des crochets (17), en prise dans un câble porteur (18), de préférence en matière plastique, et fixés aux corps creux (12) sont prévus en tant que moyens de fixation du condensateur (11) de forme tubulaire.

9. Dispositif de refroidissement et de condensation (10) selon la revendication 7 ou 8, **caractérisé en ce qu'**un dispositif de ventilation (24), avec lequel un courant d'air de refroidissement peut être généré au travers du condensateur (11), est agencé sur ou dans au moins une bride de raccordement (23) du condensateur (11).

10. Dispositif de refroidissement et de condensation (10) selon l'une quelconque des revendications 4 à 9, **caractérisé en ce que**, en position d'utilisation, une rigole collectrice (26) gonflable est fixée au-dessous du condensateur (11) de forme tubulaire pour recueillir le condensat se formant sur le côté extérieur (21) du condensateur (11).

11. Dispositif de refroidissement et de condensation (10) selon la revendication 10, **caractérisé en ce que** ladite rigole collectrice (26) se compose d'un matériau en feuilles et présente des chambres (27) de forme tubulaires, agencées en périphérie et gonflables, dans lesquelles sont en prise des éléments de maintien (28) qui sont fixés au corps creux (12) du condensateur de forme tubulaire.

12. Dispositif de refroidissement et de condensation (10) selon l'une quelconque des revendications 1 à 3, **caractérisé en ce que** ledit au moins un condensateur (11) de forme tubulaire présente des moyens de fixation (18, 23) destinés au montage vertical.

13. Dispositif de refroidissement et de condensation (10) selon la revendication 12, **caractérisé en ce qu'**est conçu, à l'extrémité d'entrée du condensateur (11) de forme tubulaire, de préférence à une bride de raccordement (23), un récipient d'eau de refroidissement (29) qui présente des ouvertures (30) en son fond pour distribuer de l'eau de refroidissement sous forme de gouttes dans l'intérieur du condensateur (11) de forme tubulaire, de sorte que ladite eau de refroidissement distribuée sous forme de gouttes s'égoutte sur le côté intérieur (22) des corps creux (12) en matériau en feuilles et s'écoule le long de la surface intérieure.

14. Dispositif de refroidissement et de condensation (10) selon la revendication 12 ou 13, **caractérisé en ce qu'**à l'extrémité de sortie du condensateur (11) de forme tubulaire, de préférence à une bride de raccordement (23), un récipient (31) est conçu pour récupérer l'eau de refroidissement, ainsi qu'en ce qu'un dispositif de retour (32) de l'eau de refroidissement débouchant dans le récipient d'eau de refroidissement (29) agencé du côté de l'entrée est prévu à partir du récipient de récupération (31).

15. Dispositif de refroidissement et de condensation (10) selon la revendication 14, **caractérisé en ce que** le dispositif de retour (32) de l'eau de refroidissement présente une pompe à eau de refroidissement (33) fonctionnant de préférence à l'énergie solaire.

16. Dispositif de refroidissement et de condensation (10) selon la revendication 14 ou 15, **caractérisé en ce que** des câbles porteurs (18), de préférence en matière plastique, qui délimitent l'étirement longitudinal du condensateur (11) de forme tubulaire, sont tendus entre la bride de raccordement (23) du côté de l'entrée et celle du côté de la sortie.

17. Dispositif de refroidissement et de condensation (10) selon l'une quelconque des revendications 12 à 16, **caractérisé en ce qu'**une cuvette de rétention (34) est fixée à l'extrémité de sortie du condensateur (11) de forme tubulaire pour recueillir le condensat se formant sur le côté extérieur (21) du condensateur (11).
